# EUROPÄISCHE PATENTSCHRIFT

(11) **EP 1 105 576 B1**
(45) Veröffentlichungstag und Bekanntmachung des Hinweises auf die Patenterteilung: **26.05.2004**
(21) Anmeldenummer: 99942847.7
(22) Anmeldetag: 12.08.1999
(51) Int. Cl.: E01C 5/06

(54) **PFLASTERSTEIN MIT VERZAHNUNGSELEMENTEN**
PAVING STONE
PIERRE A PAVE

(30) Priorität: 17.08.1998 DE 19837165; 15.04.1999 DE 19917113
(43) Veröffentlichungstag der Anmeldung: 13.06.2001
(73) Patentinhaber: Scheiwiller, Rolf, CH-6052 Hergiswill (CH)
(72) Erfinder: Scheiwiller, Rolf, CH-6052 Hergiswill (CH)
(74) Vertreter: Otten, Herbert
(86) Internationale Anmeldenummer: PCT/EP1999/005874
(87) Internationale Veröffentlichungsnummer: WO 2000/009808

(56) Entgegenhaltungen:
- EP-A- 0 761 884
- DE-A- 2 514 963
- DE-A- 3 722 683
- DE-A- 19 704 425
- GB-A- 1 402 447

## Beschreibung

Die Erfindung betrifft einen Pflasterstein, insbesondere aus Beton oder dgl. nach dem Oberbegriff des Anspruchs 1.

Bei vielen bekannten, gegen seitliches Verschieben verzahnten Pflastersteinbelägen werden die Steine mit der Zeit im Verbund gelockert. Durch Bremskräfte von auf dem Belag fahrenden Fahrzeugen verschieben sich die Steine in Fahrtrichtung. Sand in den Fugen fließt hierbei in den Unterbau oder in das darunter liegende Splittbett ab. Dadurch werden die Steine um das Spiel der Versandung frei und können sich sowohl in horizontaler als auch in vertikaler Richtung innerhalb eines gewissen Spielraums leicht verschieben. Beim Fahren auf einem solchen Belag macht sich dies durch entsprechende Abrollgeräusche bemerkbar.

Um einen stabileren Pflastersteinverbund zu erhalten, wurden in der Vergangenheit bereits vertikale Verzahnungen an Pflastersteinen angebracht. Derartige Verzahnungen finden sich beispielsweise in der EP 752 500 oder in der dort zitierten Druckschrift DE 70 28 919. Beide Ausführungen gemäß dem Stand der Technik sind an wenigstens einer Seite sowohl mit Nocken als auch mit Nischen versehen. Hierdurch wird zwar eine zuverlässige Vertikalverzahnung erreicht, das Verlegen derartiger Pflastersteine gestaltet sich jedoch schwierig, da diese Pflastersteine nur in horizontaler Verlegerichtung aneinanderzufügen sind. Dies erschwert die maschinelle Verlegung mit entsprechendem Hebezeug und birgt immer die Gefahr, daß beim horizontalen Versatz der Pflastersteine Material aus dem Unterbau zusammengeschoben wird und zwischen die Steinseiten gelangt.

Aus der gattungsbildenden EP 0 636 755 B1 ist ein Formstein und insbesondere eine Bodenfliese bekannt geworden, die trapezförmig ausgebildete seitliche Abstandshalter aufweist. Die Abstandshalter laufen von unten nach oben hin konisch zu, um eine möglichst gute Verzahnung mit einer sich aushärtenden Fugenmasse sicherzustellen und auf diese Weise eine Aufwärtsbewegung der Bodenfliese sicher zu verhindern. Eine derartige Verzahnung ist bei Pflastersteinen nicht möglich, da als Fugenmasse im Allgemeinen nur lose einzufüllender Sand oder dergleichen verwendet wird.

Aus den Druckschriften DE 37 22 683 A oder der DE 197 04 425 A sind Formsteine bekannt geworden, die eine vertikale Verzahnung durch einen seitlichen Versatz von oberer zu unterer Fläche des Formsteins bewirken, so dass an gegenüberliegenden Seitenflächen jeweils ein oberer Vorsprung und gegenüberliegend ein unterer Vorsprung gebildet wird, die beim Zusammenfügen formschlüssig ineinander greifen. Derartige Formsteine sind nur im Längsverband verlegbar, wobei zur Erzielung einer Fuge entweder unterschiedlich starke Vorsprünge oder zusätzliche Abstandshalter vorzusehen sind.

Der Erfindung liegt die Aufgabe zugrunde, einen Formstein vorzuschlagen, der eine Vertikalverzahnung auch bei losem Verfügungsmaterial wie Sand oder dergleichen ermöglicht und in vertikaler Richtung in herkömmlicher Weise zu verlegen ist. Dabei soll sich der Formstein in seiner Geometrie von üblichen, quaderförmigen Pflastersteinen nicht unterscheiden.

Diese Aufgabe wird ausgehend von einem Pflasterstein der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßer Pflasterstein dadurch aus, daß an jeder mit vertikalen Verzahnungselementen versehenen Seite des Pflastersteins jeweils nur übergreifende oder nur untergreifende Verzahnungselemente vorgesehen sind. Hierdurch ist es möglich, einen Pflasterstein mit einer nur übergreifende Verzahnungselemente aufweisenden Seite von oben an eine Seite eines Nachbarsteins anzufügen, die nur untergreifende Verzahnungselemente aufweist. Der Pflasterstein mit den übergreifenden Verzahnungselementen sichert nach dem Verlegen den benachbarten Pflasterstein mit untergreifenden Verzahnungselementen in vertikaler Richtung.

Ein erfindungsgemäßer Pflasterstein kann beispielsweise so ausgebildet werden, daß eine Seite mit übergreifenden Verzahnungselementen und die gegenüberliegende Seite mit untergreifenden Verzahnungselementen versehen wird. Somit kann Reihe für Reihe der Pflastersteinverbund durch übliches Einsetzen von oben verlegt werden. Die beiden übrigen Seitenwände können beispielsweise ohne Vertikalverzahnung und somit frei in vertikaler Richtung gegenüber Nachbarsteinen verschiebbar ausgebildet werden. In dieser Ausführungsform findet die Vertikalverzahnung von einer Steinreihe zur nächsten Steinreihe statt.

In einer besonders vorteilhaften Ausführungsform der Erfindung hingegen werden zwei über Eck aneinander grenzende, benachbarte Steinseiten mit übergreifenden Verzahnungselementen und zwei über Eck aneinander grenzende, benachbarte Steinseiten mit untergreifenden Verzahnungselementen versehen. Derartige Steine können nach wie vor in Verlegerichtung von oben in den bereits verlegten Teil des Pflastersteinverbunds eingesetzt werden. Nach wie vor kann der Pflastersteinverbund Reihe für Reihe verlegt werden, wobei die jeweils neu verlegte Reihe von einer Seite her aufgebaut wird. Der als nächstes zu verlegende Pflasterstein wird in die zwischen zwei Steinen benachbarter Pflastersteinreihen gebildete Ecke eingelegt und sichert beide Nachbarsteine in vertikaler Richtung.

In einer besonderen Ausführungsform der Erfindung werden die oberen und unteren Verzahnungselemente als seitliche Nocken ausgebildet. Dies hat gegenüber den bekannten Ausführungen mit Nischen fertigungstechnische Vorteile.

In einem vorteilhaften Ausführungsbeispiel der Erfindung werden zwei oder mehrere Nocken an einer Steinseite angebracht. Dies hat eine wirksamere Verzahnung der einzelnen Steine untereinander zur Folge.

In einer bevorzugten Ausführungsform der Erfindung werden im verlegten Steinverbund, z. B. durch die Verzahnungselemente gebildete Taschen für Fugenmaterial vorgesehen, in deren unteren Bereich die durch benachbarte Verzahnungsflächen gebildeten Fugen zwischen einzelnen Verzahnungselementen enden.

In den genannten Taschen kann gewissermaßen eine bestimmte Menge an Fugenmaterial bevorratet werden. Dieses Fugenmaterial, das in der Regel aus feinem Sand besteht, wandert im Laufe der Zeit durch die zwischen den Verzahnungselementen gebildeten Fugen nach unten und versackt im Untergrund. Durch den Nachschub aus den genannten Depots oder Taschen bleibt über einen längeren Zeitraum sichergestellt, daß sich stets ausreichend Fugenmaterial zwischen den Berührungsflächen der einzelnen Steine befindet. Dies ist für einen stabilen Pflastersteinverbund notwendig. Aufgrund des im Steinverbund aufnehmbaren Vorrats an Fugenmaterial braucht bei einem Steinverbund gemäß der Erfindung nur in vergleichsweise großen Abständen neues Material von oben her eingebracht werden.

In einer Weiterbildung dieser Ausführungsform werden die Verzahnungselemente so ausgebildet, daß die untergreifenden Verzahnungselemente seitlich der übergreifenden Verzahnungselemente hervorstehen, in der Höhe jedoch unterhalb der übergreifenden Verzahnungselemente enden. Hierdurch wird zwischen den einzelnen Verzahnungselementen eine solche Vorratstasche gebildet.

Weiterhin ist es von Vorteil, wenn in dieser Ausführungsform das übergreifende Verzahnungselement an seiner Oberseite seitlich abfallend ausgebildet ist. Dies hat zur Folge, daß von oben herangebrachtes Fugenmaterial seitlich in die zwischen den einzelnen Verzahnungselementen gebildeten Taschen gelangen kann.

Das übergreifende Verzahnungselement wird in einer besonderen Ausführungsform hierbei mit einer Dachschräge unter einem mittigen Giebel versehen. Diese Dachform bietet über die gesamte Breite des Verzahnungselementes einen maximalen Neigungswinkel, wobei die mittige Anordnung des Giebels einen gleichen Gleitweg beidseits des Giebels für das Fugenmaterial vorsieht.

In einer besonders vorteilhaften Ausführungsform der Erfindung werden die Verzahnungsflächen benachbarter Verzahnungselemente schräg ausgebildet. Dies erleichtert gegenüber anderen, beispielsweise abgestuften Formen den Nachschub des nach unten sich verflüchtigenden Fugenmaterials in den zwischen den schrägen Verzahnungsflächen ebenfalls schräg ausgebildeten Fugen.

vorzugsweise werden die Vorratstaschen für das Fugenmaterial mit einem gewissen Abstand von der Oberkante des Fahr- bzw. Tretbelags ausgebildet. Im oberen Bereich zwischen den einzelnen Steinen wird beim Befahren durch einen gewissen Vakuum- oder Saugeffekt das Fugenmaterial nach oben aus dem Steinverbund abgezogen. Erst mit einem gewissen Abstand von einigen Zentimetern von der Oberkante der Pflastersteine ist gewährleistet, daß das bevorratete Fugenmaterial in den Vorratstaschen verbleibt.

Weiterhin ist es von Vorteil, wenn die untergreifenden Verzahnungselemente eines bestimmten Pflastersteins senkrecht nach unten verlaufende Verzahnungsflächen aufweisen. Auf diese Weise erhält man einen Stein, der als sogenannter "Schlüsselstein" bezeichnet werden kann. Dieser Stein hat die Eigenschaft, daß er aus dem Pflastersteinverbund herausgenommen werden kann, auch wenn er auf allen Seiten von Pflastersteinen umgeben ist. Somit können an bestimmten Stellen des Pflastersteinbelags Schlüsselsteine vorgesehen sein, die es erlauben, den Pflastersteinverbund ohne Beschädigung eines Steines oder ohne das Abdecken unnötig großer Flächen aufzulösen. Dabei kann der "Schlüsselstein" eine besondere Kennzeichnung aufweisen, z. B. eine von oben erkennbare Halbrille oder dergleichen, um diesen Stein in der verlegten Fläche zu identifizieren.

In einer besonders vorteilhaften Ausführungsform der Erfindung sind die übergreifenden Verzahnungselemente als "Rücksprünge", d. h. Ausbuchtungen in der Seitenwandung, ausgebildet. Diese Ausbildung erlaubt ein eventuell gewünschtes fugenloses Verlegen der Steine. Ein seitlicher Abstandshalter kann jedoch auch hier eine Fugenverlegung bewirken. Außerdem ist der Stein mit zwei planen Seitenflächen besonders gut maschinell zu verlegen, da optimale Anlage- bzw. Greifflächen zur Verfügung stehen.

Ausführungsbeispiele der Erfindung sind in den Zeichnungen dargestellt und werden anhand der Beschreibung nachfolgend näher erläutert.

Im Einzelnen zeigen
- Fig. 1: eine perspektivische Darstellung eines Seitenecks eines erfindungsgemäßen Pflastersteins,
- Fig. 2: eine Seitenansicht eines erfindungsgemäßen Pflastersteins,
- Fig. 3: eine Draufsicht auf den Übergangsbereich zwischen zwei benachbarten Pflastersteinen,
- Fig. 4: eine Verlegeanordnung von vier benachbarten Pflastersteinen, die zur Veranschaulichung ihrer Orientierung voneinander beabstandet dargestellt sind,
- Fig. 5: eine perspektivische Darstellung eines Seitenecks eines erfindungsgemäßen Schlüsselsteins,
- Fig. 6: eine Draufsicht auf einen Pflasterstein mit Rücksprüngen,
- Fig. 7: eine Seitenansicht des Pflastersteins gemäß Fig. 6,
- Fig. 8: eine weitere Seitenansicht des Pflastersteins gemäß Fig. 6,
- Fig. 9: eine Verlegeanordnung von zwölf benachbarten Pflastersteinen mit Rücksprüngen gemäß Fig. 6, die ineinandergreifen,
- Fig. 10: eine Draufsicht auf einen Pflasterstein mit im Querschnitt schwalbenschwanzförmigen, kegelstumpfförmigen Nocken,
- Fig. 11: eine Seitenansicht des Pflastersteins gemäß Fig. 10,
- Fig. 12: eine weitere Seitenansicht des Pflastersteins gemäß Fig. 10,
- Fig. 13: eine Verlegeanordnung von zwölf benachbarten Pflastersteinen mit Rücksprüngen gemäß Fig. 10, die ineinandergreifen,
- Fig. 14: eine Draufsicht auf einen Pflasterstein mit im Querschnitt parallelogrammförmigen, kegelstumpfförmigen Nocken,
- Fig. 15: eine Seitenansicht des Pflastersteins gemäß Fig. 14,
- Fig. 16: eine weitere Seitenansicht des Pflastersteins gemäß Fig. 14,
- Fig. 17: eine Verlegeanordnung von zwölf benachbarten Pflastersteinen mit Rücksprüngen gemäß Fig. 14, die ineinandergreifen,
- Fig. 18: eine perspektivische Darstellung eines weiteren erfindungsgemäßen Pflastersteins von vorne,
- Fig. 19: eine perspektivische Darstellung des weiteren erfindungsgemäßen Pflastersteins von hinten,
- Fig. 20: eine Variante des Pflastersteins gemäß Figur 18, 19,
- Fig. 20a: eine Draufsicht des Pflastersteins gemäß Fig. 18, 19, 20,
- Fig. 20b: eine Ansicht der Seitenwand 4 des Pflastersteins gemäß Fig. 18, 19, 20, 20a,
- Fig. 20c: eine Teilansicht der Seitenwand 3 des Pflastersteins gemäß Fig. 18, 19, 20, 20a, 20b.

### Beschreibung der Ausführungsbeispiele:

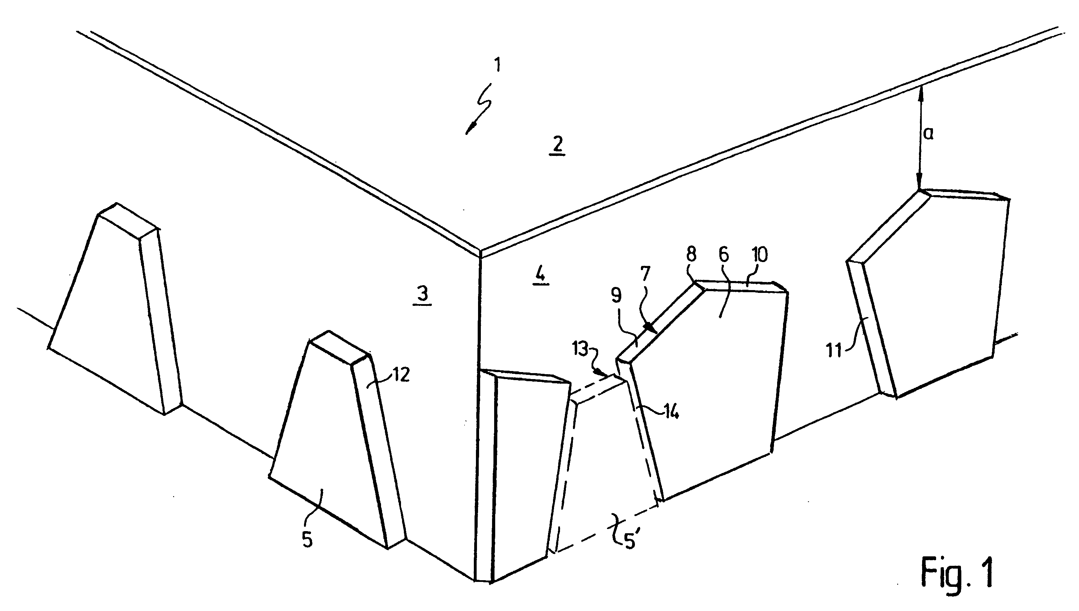

Der Pflasterstein 1 gemäß Fig. 1 umfaßt eine Fahr- oder Trittfläche 2 sowie vier dazu vertikal stehende Seitenwände, von denen zwei benachbarte über Eck stehende Seitenwände 3, 4 in Fig. 1 dargestellt sind. Jede der Seitenwände 3, 4 ist mit Nocken versehen, wobei die Seitenwand 3 untergreifende Nocken 5 und die Seitenwand 4 übergreifende Nocken 6 aufweist. Zwischen zwei übergreifenden Nocken 6 ist mit gestrichelten Linien ein untergreifender Nocken 5' eines benachbarten Pflastersteins im Pflastersteinverbund angedeutet.

Die untergreifenden Nocken 5 sind trapezförmig aufgebaut. Die übergreifenden Nocken 6 sind im unteren Bereich komplementär zu den untergreifenden Nocken 5 ausgebildet und oben mit einem Dach 7 mit jeweils einem Giebel 8 und zwei Dachschrägen 9, 10 versehen.

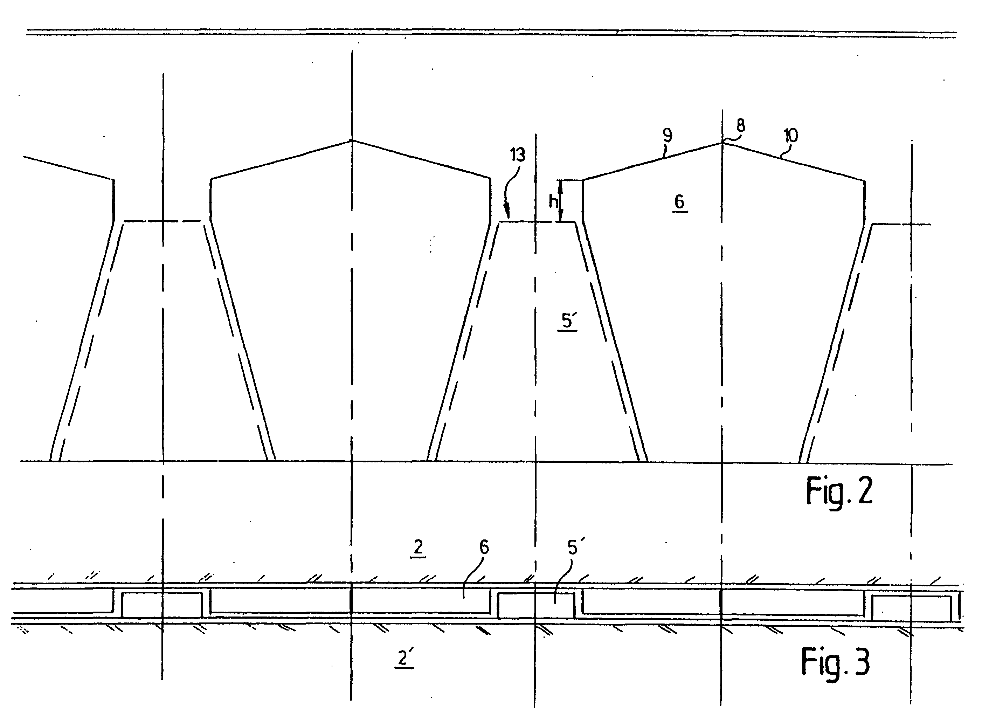

Die Verzahnungsfläche 11 steht über eine Höhe h (vgl. Fig. 3) über die entsprechende Verzahnungsfläche 12 eines untergreifenden Nockens 5 über. Dadurch ergeben sich seitlich durch übergreifende Nocken 6 und unten durch untergreifende Nocken 5 begrenzte Taschen 13, die mit Fugenmaterial, beispielsweise Sand, befüllbar sind. Nach oben hin werden die Taschen 13 durch die Dachschrägen 9, 10 vervollständigt.

An der Unterseite der Taschen 13 gehen die zwischen den Verzahnungsflächen 11, 12 gebildeten Fugen 14 nach unten hin ab. Durch die trapezförmige Ausbildung der untergreifenden Nocken 5 bzw. des unteren Bereichs der übergreifenden Nocken 6 verlaufen diese Fugen 14 schräg geradlinig nach unten.

Die Taschen 13 sind mit einem Abstand a, der dem Abstand zwischen den Giebeln 8 und der Fahr- oder Trittfläche 2 entspricht, unterhalb der Fahr- oder Trittfläche angeordnet. Somit kann das Fugenmaterial innerhalb der Taschen 13 nicht durch Saugeffekte beim Befahren des aus den Pflastersteinen 1 gebildeten Belags abgezogen werden.

Das Verlegen eines Pflastersteinverbunds aus erfindungsgemäßen Pflastersteinen 15, 16, 17, 18 kann in üblicher Weise durch Einfügen des jeweils nächsten Pflastersteins von oben her bewerkstelligt werden.

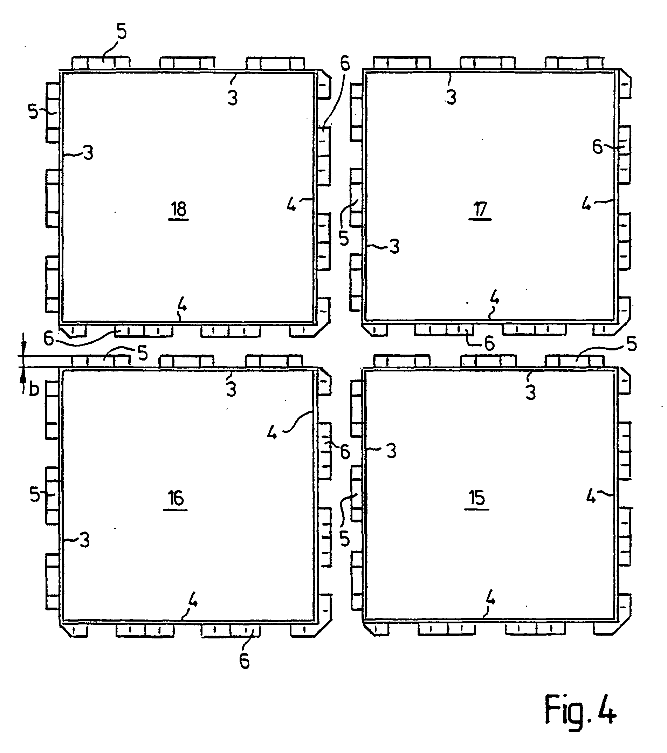

Die Anordnung gemäß Fig. 4 veranschaulicht beispielsweise, wie vier Pflastersteine zueinander zu verlegen sind. So kann beispielsweise der Pflasterstein 15 als erstes gesetzt werden. An seinen beiden mit untergreifenden Nocken 5 versehenen Seiten können sodann benachbarte Pflastersteine 16, 17 mit übergreifenden Nocken 6 von oben auf die untergreifenden Nocken 5 aufgesetzt werden. So kann beispielsweise eine ganze Reihe ausgehend vom Pflasterstein 15 und dem Pflasterstein 16 gelegt werden. Die nächste Reihe würde dann mit dem Pflasterstein 17 beginnen und mit dem Pflasterstein 18, der mit seinen übergreifenden Nocken 6 auf die untergreifenden Nocken 5 der Pflastersteine 16, 17 gesetzt wird, fortgesetzt werden. Somit sichern jeweils zwei Steine, beispielsweise die Steine 16, 17 einen benachbarten Stein 15, gegen vertikales Ausheben.

Anschließend kann Fugenmaterial von oben eingebracht werden. Oberhalb der Nocken 5, 6 ist eine der Nockenbreite b entsprechende Sichtfuge zwischen den Fahr- und Trittbelägen 2 der Pflastersteine 15, 16, 17, 18 vorhanden, in die das Fugenmaterial gefüllt wird. Das Fugenmaterial kann sich sodann in den Taschen 13 zwischen den Giebeln 8 benachbarter Nocken 6 sammeln und von dort in die Fugen 14 zwischen den Verzahnungsflächen 11, 12 in dem Maße nachlaufen, wie es sich von dort nach unten in den Unterbau des Belags verflüchtigt.

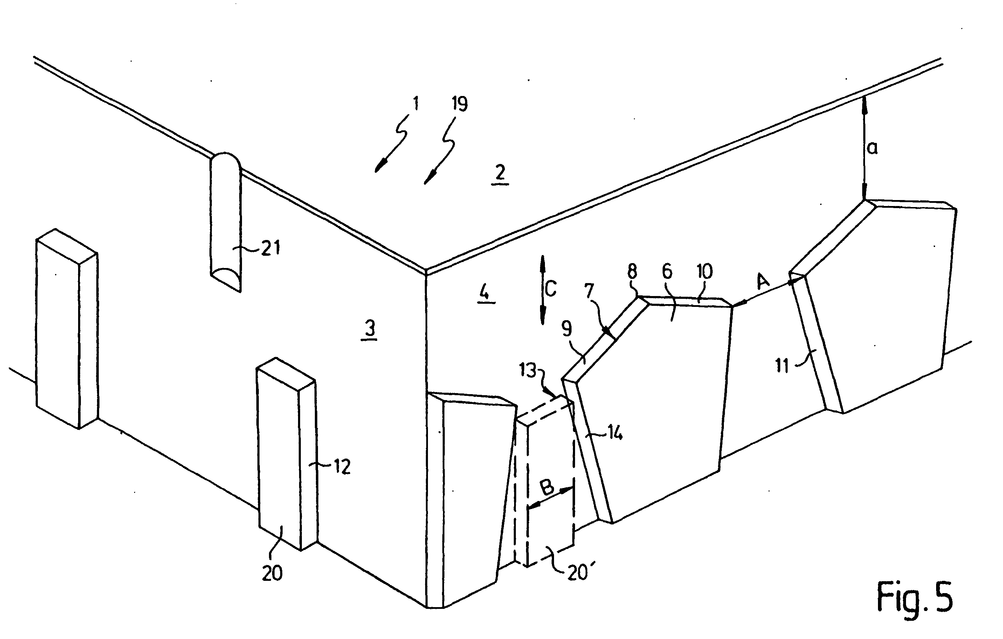

Fig. 5 zeigt als Sonderstein einen als "Schlüsselstein 19" ausgeführten Pflasterstein 1. Im Gegensatz zu dem in Fig. 1 gezeigten Pflasterstein 1 weisen die Seitenwände 3 keine untergreifenden, d. h. nach oben hin sperrende Nocken 5, sondern nichtsperrende Nocken 20 mit z. B. senkrecht nach unten verlaufenden Verzahnungsflächen 12 auf. Zwischen zwei übergreifenden Nocken 6 ist mit gestrichelten Linien ein nichtsperrender Nocken 20' eines benachbarten Pflastersteins im Pflastersteinverbund angedeutet. Die nichtsperrenden Nocken 20 besitzen eine Breite B, die etwa gleich oder kleiner ist als der Abstand A zwischen zwei übergreifenden Nocken 6. Somit ist ein Durchtritt der nichtsperrenden Nocken 20 zwischen den übergreifenden Nocken 6 in den Richtungen des Bewegungspfeils C, d. h. ein Herausheben des Steins nach oben, immer möglich.

Der Schlüsselstein 19 weist z. B. eine oder mehrere Halbrillen 21 an seiner Seitenwandung 3, 4 auf, mit deren Hilfe er auch im verlegten Zustand leicht von den anderen Pflastersteinen 1 zu unterscheiden ist. Es können auch andere Erkennungsmerkmale vorhanden sein.

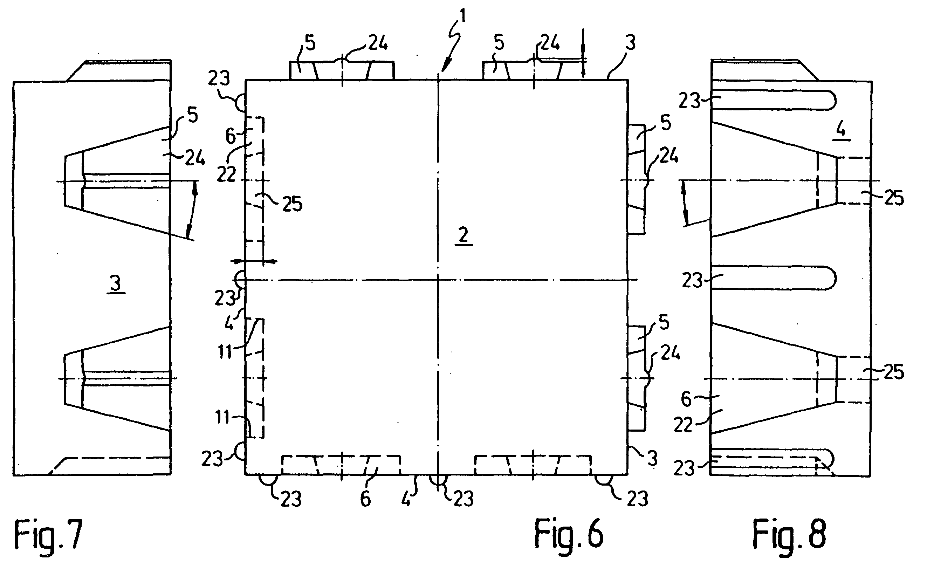

Fig. 6 zeigt einen alternativen Pflasterstein 1, dessen übergreifende Verzahnungselemente 6 als übergreifende "Rücksprünge 22" ausgebildet sind. Die Verzahnungsflächen 11 sind hier als hinter die Seitenwand 4 zurückspringende Flächen, d. h. in die Seitenwandung 4 eingelassene Ausnehmungen, ausgebildet. In diese nach unten hin offenen Ausnehmungen ragen die untergreifenden Nocken 5 der benachbarten Seitenwandungen 3 des Nachbarsteins hinein. Die Seitenwände 4 können Abstandhalter 23 aufweisen, die dazu dienen, die benachbarten Pflastersteine 1 so auf Abstand zu halten, daß eine Fuge von definierter Breite zwischen den Steinen gewährleistet ist. Die untergreifenden Nocken 5 können Gleitnasen 24 aufweisen, die dazu dienen, die Reibung zwischen den zur Seitenwand 4 parallel ausgerichteten Flächen der übergreifenden Rücksprünge 22 eines ersten Pflastersteins 1 und des untergreifenden Nocken 5 eines weiteren Pflastersteins beim Zusammenschieben gering zu halten. Weiterhin werden damit definierte Anschlagsflächen gebildet.

Aus Fig. 7 geht hervor, daß die untergreifenden Nocken 5 wiederum einen trapezförmigen Querschnitt aufweisen, wobei der obere Bereich des trapezförmigen Nockens 5 zur Seitenwand 3 hin leicht abgeschrägt ist, während die Seitenflächen des Nockens 5 etwa senkrecht zur Seitenwandung 3 ausgerichtet sind.

In Fig. 8 ist eine Seitenansicht der Seitenwand 4 zu sehen. Die übergreifenden Rücksprünge 22 weisen im Querschnitt eine den untergreifenden Nocken 5 entsprechende Trapezstruktur auf.

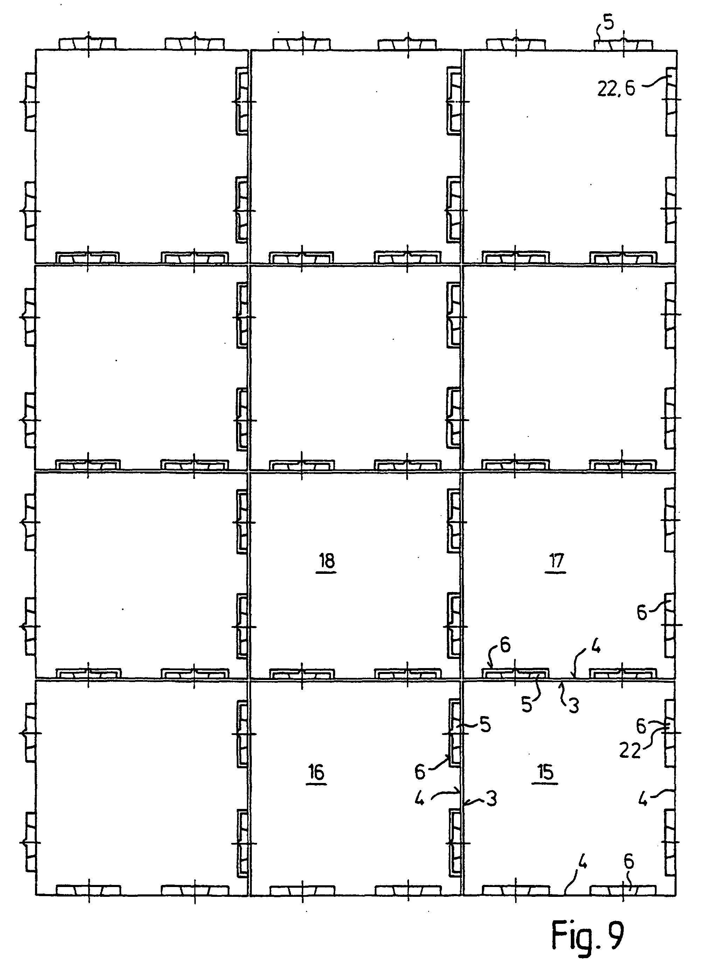

Fig. 9 zeigt eine Anordnung von zwölf Pflastersteinen mit übergreifenden Rücksprüngen 22. Für Fig. 9 gelten analog die zu Fig. 4 gemachten Aussagen.

Soll in ein solches Pflastersteinsystem wiederum ein "Schlüsselstein" eingesetzt werden, so müssen die übergreifenden Rücksprünge 22 einen nach oben geöffneten Schlitz 25 aufweisen, durch welchen der untergreifende nichtsperrende Nocken 20 nach oben herausfindet.

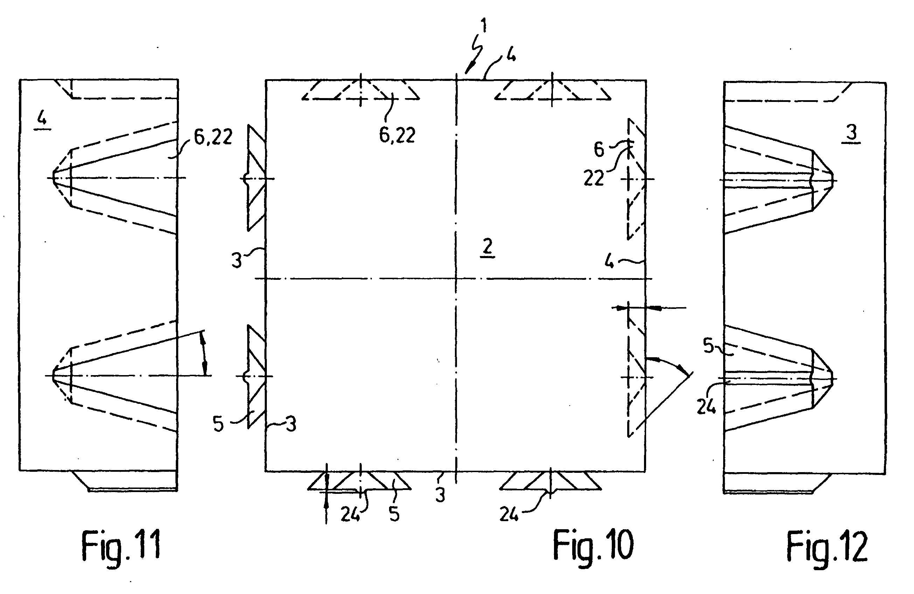

Fig. 10 zeigt eine weitere Variante des in Fig. 6 dargestellten Pflastersteins 1. Bei dem in Fig. 10 dargestellten Pflasterstein 1 sind die untergreifenden Nocken 5 und die übergreifenden Rücksprünge 22 im Querschnitt schwalbenschwanzförmig ausgeführt. Auch hier können die untergreifenden Nocken 5 die Gleitnasen 24 aufweisen. Weiterhin können auch hier an den Seitenwänden 4 Abstandhalter 23 analog zu Fig. 6, 8 vorgesehen sein (nicht dargestellt).

Die Figuren 11 und 12 zeigen Seitenansichten des Pflastersteins 1 gemäß Fig. 10, wobei Fig. 11 die Seitenwandung 4 mit übergreifenden Rücksprüngen 6, 22 und die Fig. 12 die Seitenwandung 3 mit untergreifenden Nocken 5 zeigen.

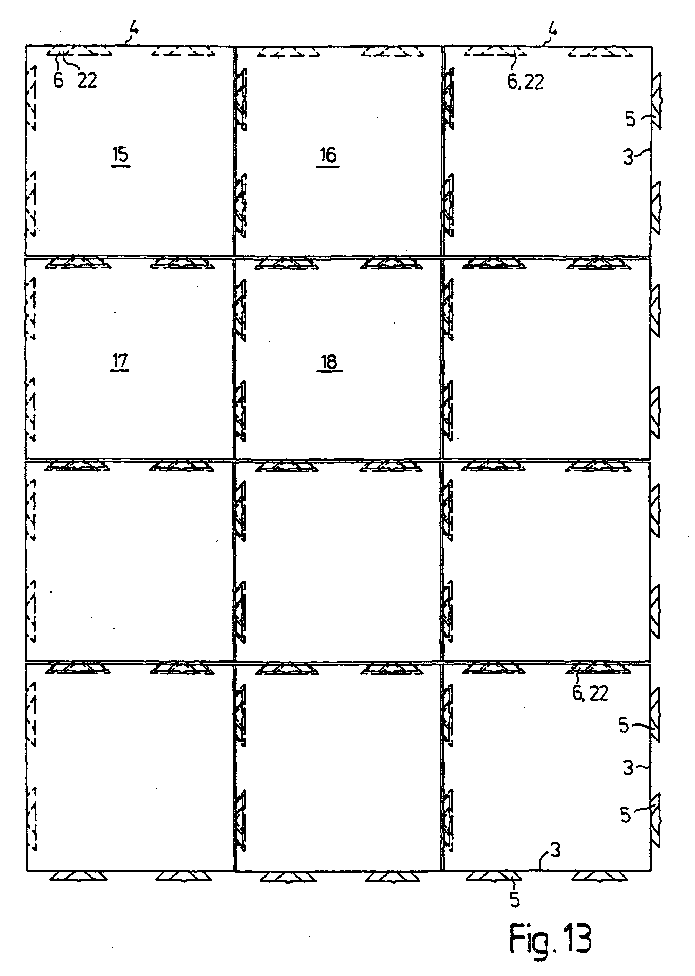

Fig. 13 zeigt in Analogie zu den Figuren 9 und 4 einen Verbund von Pflastersteinen gemäß Fig. 10

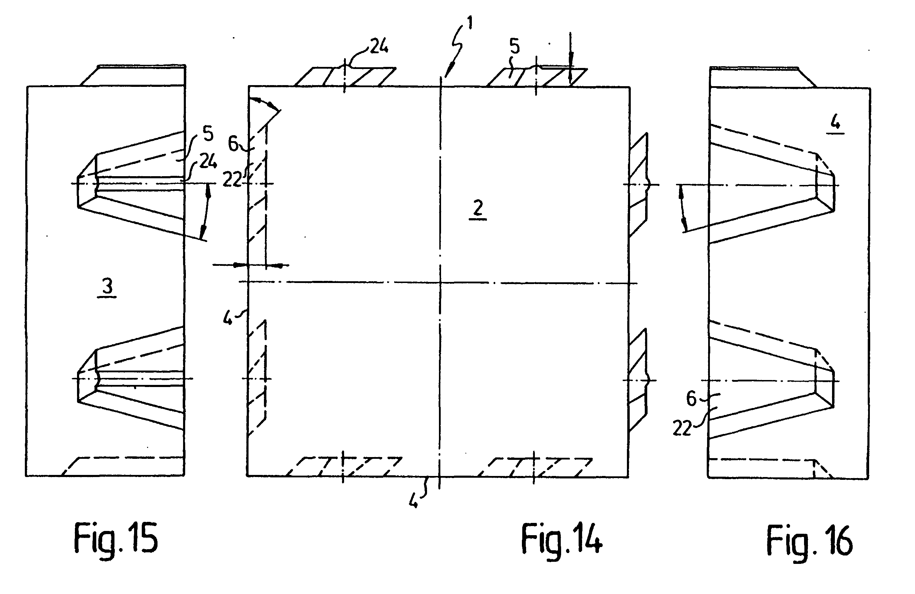

Fig. 14 zeigt eine weitere Variante eines Pflastersteins 1 mit übergreifenden Rücksprüngen 22, die im Querschnitt parallelogrammförmig ausgeführt sind. Die untergreifenden Nocken 5 weisen wiederum Gleitnasen 24 auf. Analog zu Fig. 6 können an den Seitenwänden 4 die Abstandhalter 23 vorgesehen sein (nicht dargestellt).

Die Figuren 15 und 16 zeigen Seitenansichten eines Pflastersteins 1 gemäß Fig. 14.

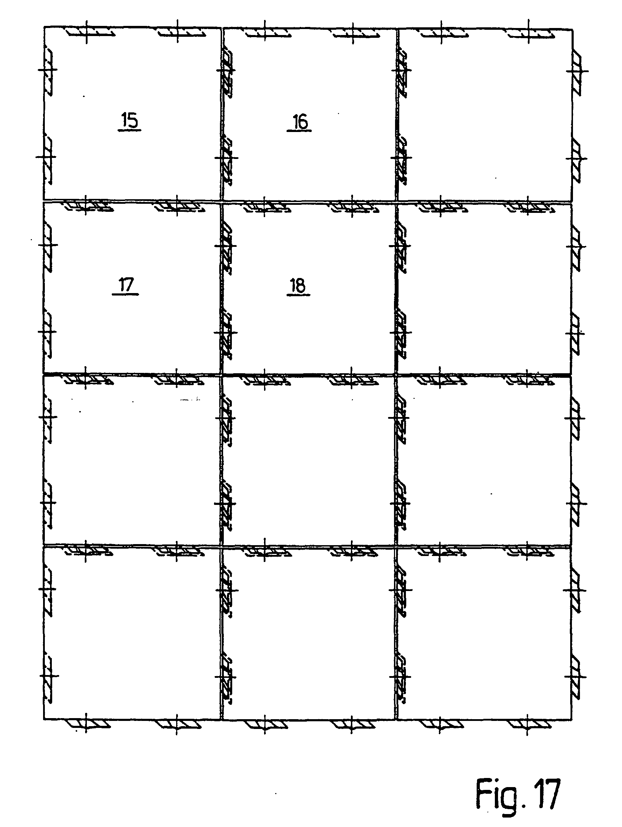

In Fig. 17 ist analog zu den Figuren 13, 9 und 4 ein Pflastersteinverbund zu sehen, der aus Pflastersteinen gemäß Fig. 14 besteht.

Mit Hilfe eines erfindungsgemäßen Pflastersteins 1 läßt sich ein dauerhaft stabiler Pflastersteinbelag verlegen, bei dem die einzelnen Steine zuverlässig in vertikaler Richtung verzahnt sind und die notwendige Verfüllung mit Fugenmaterial über einen vergleichsweise großen Zeitraum gewährleistet ist.

Ein erfindungsgemäßer Stein läßt sich selbstverständlich mit weiteren vorteilhaften bekannten oder künftigen Maßnahmen mit zusätzlichen Funktionen versehen. So können beispielsweise ohne weiteres auch Sickerkanäle in vertikaler oder horizontaler Richtung vorgesehen werden, um Oberflächenwasser schneller nach unten abzuführen. Ebenso können die Tritt- oder Fahrfläche beispielsweise mit einem separaten Belag mit der jeweils gewünschten optischen oder technischen Funktion versehen werden.

Ein Pflasterstein gemäß der Erfindung wird vorzugsweise aus formbaren und gegebenenfalls verdichtungsfähigem Material, insbesondere aus Beton, gefertigt. Neben Beton kommen alle weiteren bekannten und künftigen Materialien in Betracht. So ist eine Fertigung aus Kunststoff ohne weiteres möglich. Auch eine Herstellung aus festem Vollmaterial durch entsprechende Bearbeitung ist zur Erzielung der technischen Vorteile möglich, wenngleich aus heutiger Sicht eine Fertigung durch Gießen oder verdichtungsfähigen, fast trockenem Beton aus Kostengründen vorzuziehen ist.

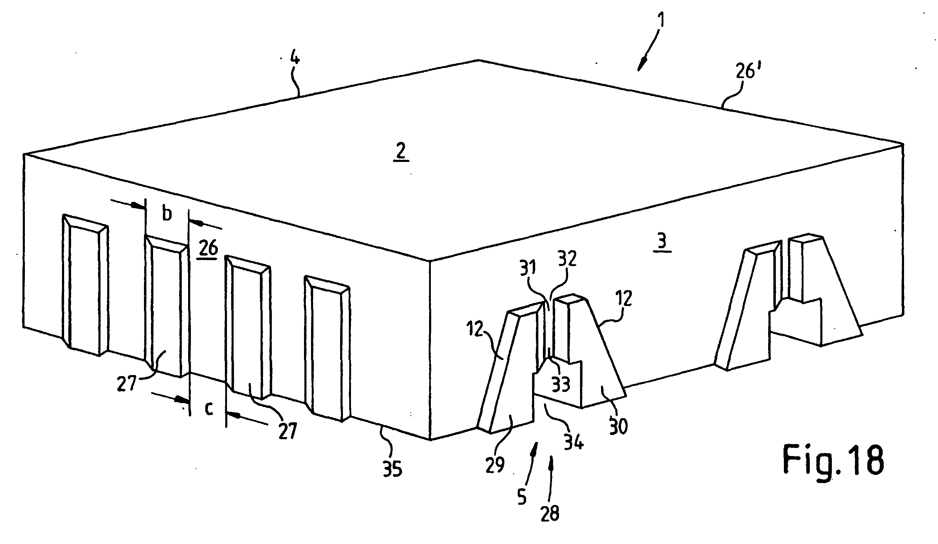

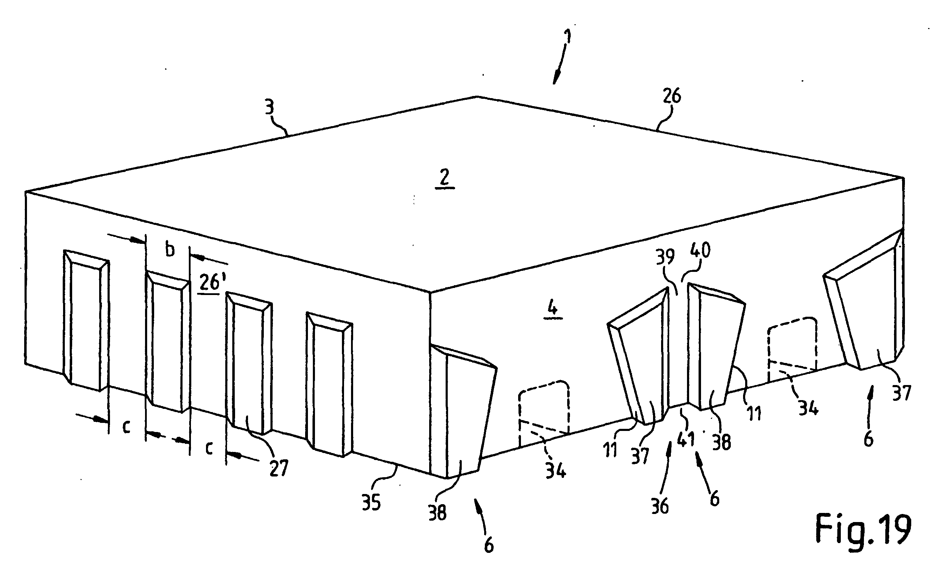

Figur 18 zeigt eine weitere Variante eines Pflastersteins 1 von vorne mit einer Fahr- oder Trittfläche 2, einer Unterseite 35 und mit Seitenwänden 3, 4. An der Seitenwand 3 sind untergreifende Nocken 5 angeordnet. Die Seitenwand 4 (siehe Figur 19) weist übergreifende Nocken 6 auf, wobei sich die Seitenwände 3, 4 gegenüberliegen. Die Seitenwänden 3, 4 werden von Seitenwänden 26, 26' verbunden, die mit Abstandhaltern 27 versehen sind. Bei den Abstandhaltern 27 handelt es sich um Abstandhalter, wie sie zum Beispiel aus der Darstellung des internationalen Geschmacksmusters DM/012288 des Anmelders grundsätzlich bekannt sind. Die Nocken 27 der Darstellung nach Figuren 18 - 20 sind eher breitflächig ausgebildet, d. h. sie wirken markant und kräftig. Der Abstand c zwischen zwei benachbarten Nocken entspricht etwa - unter Berücksichtiung des erforderlichen Spiels - der Breite b eines Nockens 27. Die gegenüberliegenden Seiten 26, 26' weisen demzufolge Nocken 27 auf, die bei einer Aneinanderreihung über die gesamte Seitenfläche 26, 26' verzahnend ineinandergreifen.

Die untergreifenden Nocken 5 sind als zweiteilige Nocken 28 ausgeführt, die aus einem linken Teilnocken 29 und einem rechten Teilnocken 30 bestehen. Die beiden Teilnocken 29, 30 sind durch einen Kanal 31 getrennt, der vorzugsweise senkrecht bzw. vertikal verläuft. Jeder Teilnocken 29, 30 weist eine Verzahnungsfläche 12 auf, die einer Verzahnungsfläche 11 eines übergreifenden Nockens 6 gegenüberliegt, wenn zwei Steine 1 miteinander verbunden sind. Der Kanal 31 besitzt einen Eintritt 32 und einen Austritts 33. Im Bereich des Austritts 33 mündet der Kanal 31 in einen weiteren Kanal 34, der auf der Unterseite 35 des Pflastersteins 1 verläuft und zu dieser und zu den Seitenwänden 3, 4 hin offen ist. Wasser, das auf dem Pflasterstein 1 abläuft, tritt durch den Eintritt 32 in den Kanal 31 ein und verläßt diesen im Bereich des Austritts 33 in den Kanal 34. Durch den Kanal 34 läuft das Wasser ab oder versickert im Untergrund.

Gemäß einer nicht dargestellten Ausführungsvariante ist der in Figur 18 dargestellte Pflasterstein 1 ohne Kanäle 34 und/oder Kanäle 31 bzw. mit einteiligen Nocken 5, 6 vorgesehen.

Die Ausgestaltung eines Pflastersteins 1 gemäß Figur 18 mit unter- bzw. übergreifenden Nocken 5, 6 an zwei gegenüberliegenden Seiten 3, 4 und Abstandhaltern 27 an den anderen beiden gegenüberliegenden Seiten 26, 26' ist besonders vorteilhaft. Durch diese Anordnung der Verzahnungselemente ist bei der Herstellung der Pflastersteine 1 eine bessere Brettbelegung möglich, da in der Form nur an der Seitenwand 4, welche die übergreifenden Nocken 6 aufweist, bauraumintensive Schieber erforderlich sind. Durch den geringeren Bedarf an Schiebern wird auch die Form kostengünstiger. Weiterhin fällt durch die einfachere Formgebung der Pflastersteine 1 praktisch kein Ausschuß an. Ein weiterer Vorteil dieser Ausführungsform liegt darin, daß an den Seiten 26, 26' des Pflastersteins 1 auch andere Formstein-Systeme angelegt und kombiniert werden können, die Abstandhalter 27 oder eine ähnliche Verzahnung aufweisen. Solche Steine sind zum Beispiel auch aus dem Steinsystem gemäß der WO 98/32925 des Anmelders bekannt. Diese Möglichkeit führt zum Beispiel bei der Gestaltung von Straßen zu Kosteneinsparungen, da es möglich ist den hochbelasteten Fahrbereich der Straße mit Pflastersteinen 1 mit über- und untergreifenden Nocken zu belegen und den nierdrig belasteten Fußgängerbereich mit kostengünstigen Pflastersteinen zu belegen, die nur eine einfache Verzahnung ohne Über- und Untergriff aufweisen. Weiterhin können durch eine Kombination der oben genannten Steintypen auch streifenförmige Muster oder Leitlinien erzeugt werden.

Figur 19 zeigt den in Figur 18 dargestellten Pflastersteins 1 von hinten. An der Seitenwand 4 sind die übergreifenden Nocken 6 angeordnet, welche die erwähnten Verzahnungsflächen 11 aufweisen, mit denen diese den Verzahnungsflächen 12 der untergreifenden Nocken 5 im verlegten Zustand gegenüberliegen. Die übergreifenden Nocken 6 sind als zweiteilige Nocken 36 ausgeführt, die aus einem Teilnocken 37 und einem Teilnocken 38 bestehen. Die Teilnocken 37, 38 sind durch einen Kanal 39 getrennt. Der Kanal 39 besitzt einen Eintritt 40 und einen Austritt 41. Es ist vorgesehen, daß das durch den Kanal 39 tretende Wasser im Bereich des Austritts 41 im Untergrund versickert. An den Übergängen der Seitenwand 4 zu den Seitenwänden 26, 26' sind jeweils nur Teilnocken 37, 38 angeordnet. An der Seitenwand 4 münden zwischen den übergreifenden Nocken 6 die Kanäle 34. Wenn die Pflastersteine 1 im Verbund vorliegen, dann übergreifen die übergreifenden Nocken des Pflastersteins 1 die untergreifenen Nocken 5 eines nicht dargestellten zweiten Pflastersteins. Das gegebenenfalls in den Kanal 31 des Pflastersteins 1 einsickernde Wasser kann durch den Kanal 34 des Pflastersteins 1 oder durch den Kanal 34 des zweiten nicht dargestellten, benachbarten Pflastersteins ablaufen.

Gemäß einem nicht dargestellten Ausführungsbeispiel der Erfindung sind zwei unterschiedliche Pflastersteine vorgesehen. Hierbei weist der erste Pflasterstein zwei gegenüberliegende Seiten mit übergreifenden Nocken auf. Der zweite Pflasterstein weist zwei gegenüberliegende Seiten mit untergreifenden Nocken auf. Ein Pflastersteinverbund wird dadurch erzeugt, daß in Querrichtung zu den gegenüberliegenden Verzahnungswänden abwechselnd erste und zweite Pflastersteine verlegt werden.

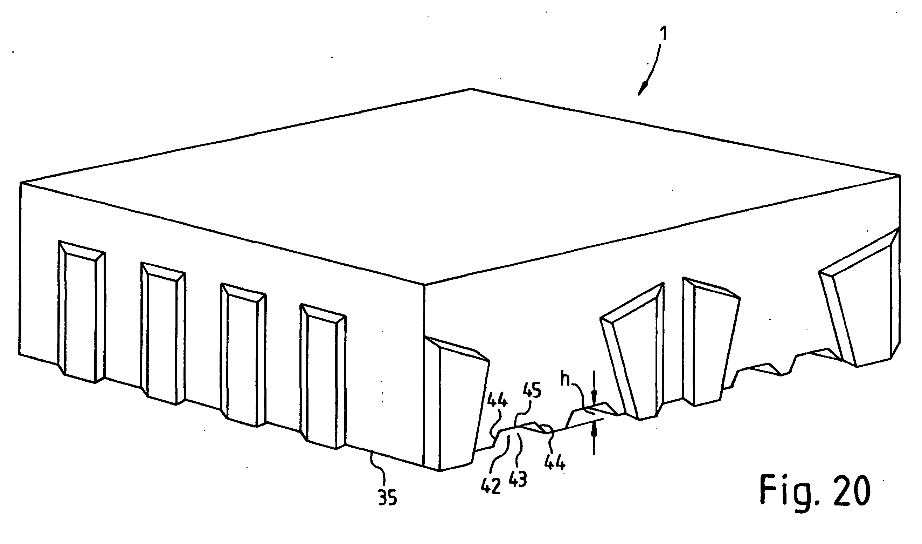

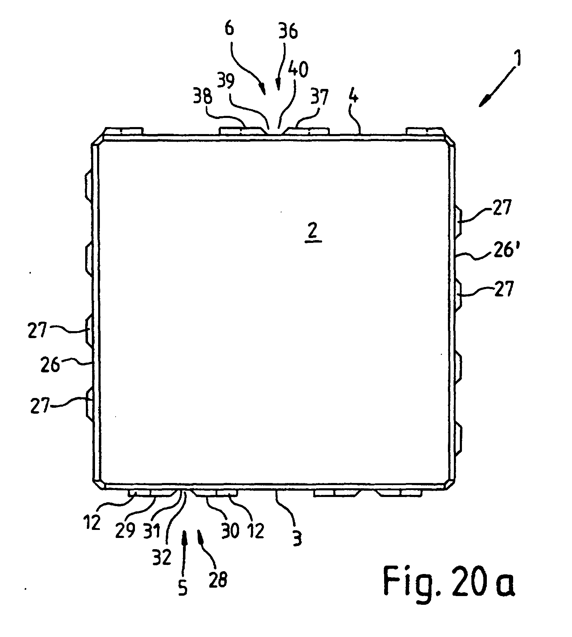

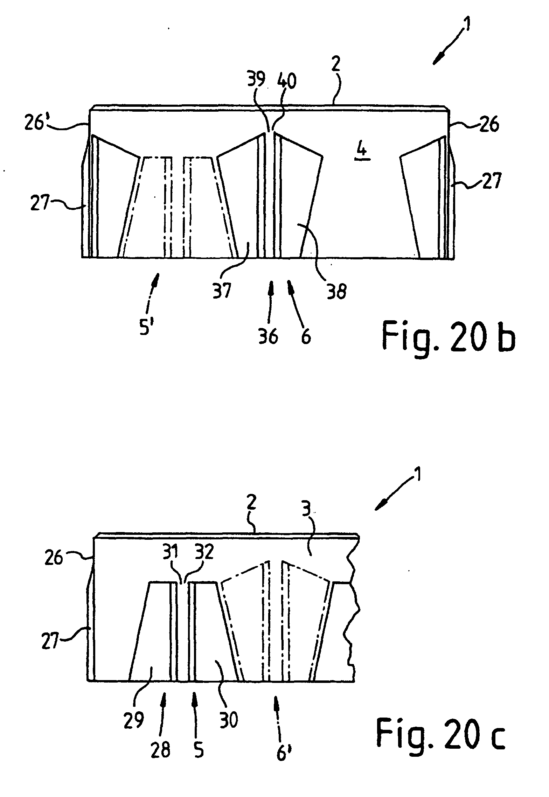

Figur 20 zeigt eine weitere Variante des in den Figuren 18, 19 dargestellten Pflastersteins 1. Der Pflasterstein 1 weist auf der Unterseite 35 parallel zueinander ausgerichtete Rillen 42 auf, die als flache Kanäle 43 ausgestaltet sind. Die Rillen 42 weisen vorzugsweise aufeinanderzulaufende Seitenwände 44 und parallel zur Unterseite 35 verlaufende Dachflächen 45 auf. Die Rillen 42 weisen eine Höhe h auf, die den senkrechten Abstand zwischen der Unterseite 35 und der Dachfläche 45 definiert. Die Höhe h liegt insbesondere im Bereich zwischen 5 und 10 mm. Beim Verlegen des Pflastersteins 1 füllen sich die Rillen 42 mit Bodenmaterial und dienen als Schubsicherung. Weiterhin wird durch die Rillen die Oberfläche der Unterseite 35 des Pflastersteins 1 vergrößert, so daß die Flächenpressung geringer ist, mit welcher der Pflasterstein auf den Untergrund wirkt.

Gemäß einer nicht dargestellten Ausführungsvariante weist die Unterseite 35 des Pflastersteins 1 Rillen und Kanäle auf.

Die Figuren 20a, 20b, 20c zeigen weitere Ansichten des in den Figuren 18, 19, 20 dargestellten Pflastersteins. Gleiche Teile sind mit gleichen Bezugszeichen versehen, wobei die Figuren 20a, 20b, 20c zur Vereinfachung ohne die Kanäle 34 bzw. Rillen 42 dargestellt sind.

Die Figur 20b zeigt in strichpunktierter Darstellung einen untergreifenden Nocken 5' eines benachbarten Pflastersteins im Pflastersteinverbund.

Die Figur 20c zeigt in strichpunktierter Darstellung einen übergreifenden Nocken 6' eines benachbarten Pflastersteins im Pflastersteinverbund.

Die Erfindung ist nicht auf die dargestellten und beschriebenen Ausführungsbeispiele beschränkt. Sie umfaßt auch vielmehr alle Varianten im Rahmen der Schutzrechtsansprüche.

### Bezugszeichenliste:

- 1: Pflasterstein
- 2: Fahr- oder Trittfläche
- 3: Seitenwand
- 4: Seitenwand
- 5: untergreifender Nocken
- 6: übergreifender Nocken
- 7: Dach
- 8: Giebel
- 9: Dachschräge
- 10: Dachschräge
- 11: Verzahnungsfläche
- 12: Verzahnungsfläche
- 13: Tasche
- 14: Fuge
- 15: Pflasterstein
- 16: Pflasterstein
- 17: Pflasterstein
- 18: Pflasterstein
- 19: Schlüsselstein
- 20: nicht sperrende Nocken
- 21: Halbrille
- 22: übergreifender Rücksprung
- 23: Abstandhalter
- 24: Gleitnase
- 25: Schlitz
- 26: Seitenwand
- 27: Abstandhalter
- 28: zweiteiliger Nocken
- 29: Teilnocken
- 30: Teilnocken
- 31: Kanal
- 32: Eintritt
- 33: Austritt
- 34: Kanal
- 35: Unterseite
- 36: zweiteiliger Nocken
- 37: Teilnocken
- 38: Teilnocken
- 39: Kanal
- 40: Eintritt
- 41: Austritt
- 42: Rille
- 43: Kanal
- 44: Seitenwand
- 45: Dachfläche

## Patentansprüche

1. Pflasterstein zur Verwendung in einem Pflasterstein-Verband, insbesondere Betonpflasterstein oder dergleichen, mit einer oberen Fahr- oder Trittfläche (2) und dazu vertikal stehenden Seitenwänden (3, 4), wobei wenigstens eine Seitenwand (3, 4) mit wenigstens einem untergreifenden, als Nocke (5, 6) ausgebildeten Verzahnungselement versehen ist, **dadurch gekennzeichnet, dass** die wenigstens eine, als untergreifendes Verzahnungselement dienende Nocke (5) im Pflastersteinverband in Wirkverbindung steht mit entweder einer weiteren, zur untergreifenden Nocke (5) komplementären übergreifenden Nocke (6) eines benachbarten Pflastersteins, oder einer entsprechend geformten Ausnehmung (6) an bzw. in einem benachbarten Pflasterstein derart, dass die seitlich an der Nocke vorhandene Verzahnungsfläche (11) mit der Verzahnungsfläche (12) der Nocke oder Ausnehmung des benachbarten Pflastersteins eine Fuge (14) bilden, die schräg geradlinig nach unten verläuft und dass an jeweils zwei Seitenwände (3, 4) des Pflastersteins (1) jeweils nur übergreifende (6) oder untergreifende (5) Verzahnungselemente (5, 6) vorgesehen sind.

2. Pflasterstein nach Anspruch 1 **dadurch gekennzeichnet, daß** zwei über Eck aneinander grenzende benachbarte Steinseiten (4) mit übergreifenden Verzahnungselementen (6) versehen sind.

3. Pflasterstein nach einem der vorgenannten Ansprüche **dadurch gekennzeichnet, daß** zwei über Eck aneinander grenzende benachbarte Steinseiten (3) mit untergreifenden Verzahnungselementen (5) versehen sind.

4. Pflasterstein nach einem der vorgenannten Ansprüche **dadurch gekennzeichnet, daß** die übergreifenden (6) und untergreifenden (5) Verzahnungselemente seitliche Nocken sind.

5. Pflasterstein nach einem der vorgenannten Ansprüche **dadurch gekennzeichnet, daß** zwei oder mehrere Verzahnungselemente (6) an einer Seite (4) vorgesehen sind.

6. Pflasterstein nach einem der vorgenannten Ansprüche **dadurch gekennzeichnet, daß** die Verzahnungselemente (5, 6) im verlegten Pflastersteinverbund Taschen (13) für Fugenmaterial bilden, in deren unteren Bereich die zwischen benachbarten Verzahnungsflächen (11, 12) zweier Verzahnungselemente (5, 6) gebildeten Fugen (14) enden.

7. Pflasterstein nach einem der vorgenannten Ansprüche **dadurch gekennzeichnet, daß** wenigstens ein Teil der untergreifenden Verzahnungselemente (5) seitlich über ein übergreifendes Verzahnungselement (6) hervorsteht, jedoch in der Höhe unterhalb des übergreifenden Verzahnungselementes (6) endet.

8. Pflasterstein nach einem der vorgenannten Ansprüche **dadurch gekennzeichnet, daß** die Oberseite (9, 10) der übergreifenden Verzahnungselemente (6) seitlich abfallend ausgebildet ist.

9. Pflasterstein nach einem der vorgenannten Ansprüche **dadurch gekennzeichnet, daß** die übergreifenden Verzahnungselemente (6) mit Dachschrägen (10, 11) und einem mittig angeordneten Giebel (8) versehen sind.

10. Pflasterstein nach einem der vorgenannten Ansprüche, **dadurch gekennzeichnet, daß** die untergreifenden Verzahnungselemente (5) zur Bildung eines aus dem geschlossenen Verband herausnehmbaren Steins seitliche verzahnungsflächen (12) aufweisen, deren Breite B kleiner ist als die lichte Weite A der übergreifenden Verzahnungselemente (6).

11. Pflasterstein nach einem der vorgenannten Ansprüche, **dadurch gekennzeichnet, daß** die übergreifenden Verzahnungselemente (6) als übergreifende Rücksprünge (6, 22) ausgebildet sind, die Ausnehmungen (6) in den Seitenwandungen (4) bilden.

12. Pflasterstein nach Anspruch 11, **dadurch gekennzeichnet, daß** die übergreifenden Rücksprünge (6, 22) schwalbenschwanzförmige Hinterschneidungen aufweisen, wobei die untergreifenden Verzahnungselemente (5) entsprechende Formgebungen aufweisen.

13. Pflasterstein nach einem der vorgenannten Ansprüche, **dadurch gekennzeichnet, daß** nur zwei gegenüberliegende Seitenwände (3, 4) jeweils untergreifende und/oder übergreifende Verzahnungselemente (5, 6) aufweisen und daß vorzugsweise die anderen Seitenwände (26, 26') verzahnende Abstandhalter (27) über die ganze oder nur über einen Teil der Seitenflächen (26, 26') aufweisen.

14. Pflasterstein nach einem der vorgenannten Ansprüche, **dadurch gekennzeichnet, daß** zwei gegenüberliegende Seitenwände (3, 4) jeweils untergreifende Verzahnungselemente (5) aufweisen, wobei die anderen Seitenwände (26, 26') verzahnende Abstandhalter (27) aufweisen.

15. Pflasterstein nach einem der vorgenannten Ansprüche, **dadurch gekennzeichnet, daß** zwei gegenüberliegende Seitenwände (3, 4) jeweils übergreifende Verzahnuagselemente (6) aufweisen, wobei die anderen Seitenwände (26, 26') verzahnende Abstandhalter (27) aufweisen.

16. Pflasterstein nach einem der vorgenannten Ansprüche, **dadurch gekennzeichnet, daß** die Nocken (5, 6) als zweiteilige Nocken (28, 36) ausgeführt sind, die aus Teilnocken (29, 30, 37, 38) bestehen, wobei die Teilnocken (29, 30, 37, 38) durch einen Kanal (31, 39) getrennt sind.

17. Pflasterstein nach einem der vorgenannten Ansprüche, **dadurch gekennzeichnet, daß** der Kanal (31) in einen Kanal (34) mündet, der auf einer Unterseite (35) des Pflastersteins (1) angeordnet ist.

18. Pflasterstein nach einem der vorgenannten Ansprüche, **dadurch gekennzeichnet, daß** die Unterseite (35) längs und/oder quergerichtete Rillen (42) aufweist, die Bodenmaterial

19. Pflasterstein nach einem der vorgenannten Ansprüche, **dadurch gekennzeichnet, daß** die Rillen (42) vorzugsweise eine Höhe (h) zwischen 5 und 10 mm aufweisen.

## Claims

1. Paving stone for use in a paving stone assembly, in particular concrete paving stone or the like, comprising an upper driving or treading surface (2) and lateral walls (3, 4) standing perpendicularly thereto, at least one lateral wall (3, 4) being provided with at least one underlapping teething element, configured as a cam (5, 6), **characterised in that** the at least one cam (5) acting as an underlapping teething element cooperates in the paving stone assembly either with a further, overlapping cam (6), complementary to the underlapping cam (5), of an adjacent paving stone, or with a correspondingly shaped recess (6) on or in an adjacent paving stone, such that the teething surface (11) at the side of the cam forms a joint (14), which extends obliquely in a straight line downwards, with the teething surface (12) of the cam or recess of the adjacent paving stone, and **in that** only respective overlapping (6) or underlapping (5) teething elements (5, 6) are provided on the two respective lateral walls (3, 4) of the paving stone (1).

2. Paving stone according to claim 1, **characterised in that** two adjacent stone sides (4), bordering each other across a corner, are provided with overlapping teething elements (6).

3. Paving stone according to any of the preceding claims, **characterised in that** two adjacent stone sides (3), bordering each other across a corner, are provided with underlapping teething elements (5).

4. Paving stone according to any of the preceding claims, **characterised in that** the overlapping (6) and underlapping (5) teething elements are lateral cams.

5. Paving stone according to any of the preceding claims, **characterised in that** two or more teething elements (6) are provided on one side (4).

6. Paving stone according to any of the preceding claims, **characterised in that** the teething elements (5, 6) in the laid paving stone assembly form pockets (13) for joint material, in the lower region of which pockets (13) the joints (14) formed between the adjacent teething surfaces (11, 12) of two teething elements (5, 6) end.

7. Paving stone according to any of the preceding claims, **characterised in that** at least a portion of the underlapping teething elements (5) protrudes laterally above an overlapping teething element (6), but ends at a height below the overlapping teething element (6).

8. Paving stone according to any of the preceding claims, **characterised in that** the upper side (9, 10) of the overlapping teething elements (6) is configured in a laterally declining manner.

9. Paving stone according to any of the preceding claims, **characterised in that** the overlapping teething elements (6) are provided with roof tilts (10, 11) and a centrally arranged gable (8).

10. Paving stone according to any of the preceding claims, **characterised in that** the underlapping teething elements (5) comprise lateral teething surfaces (12), the breadth B of which is smaller than the inside width A of the overlapping teething elements (6), in order to form a stone that may be removed from the closed assembly.

11. Paving stone according to any of the preceding claims, **characterised in that** the overlapping teething elements (6) are configured as overlapping setbacks (6, 22), which form recesses (6) in the lateral walls (4).

12. Paving stone according to claim 11, **characterised in that** the overlapping setbacks (6, 22) comprise dovetail-shaped undercuts, the undercutting teething elements (5) comprising corresponding formations.

13. Paving stone according to any of the preceding claims, **characterised in that** only two opposite lateral walls (3, 4) comprise respective underlapping and/or overlapping teething elements (5, 6), and **in that** the other lateral walls (26, 26') preferably comprise teething spacers (27) over all or only over a part of the lateral faces (26, 26').

14. Paving stone according to any of the preceding claims, **characterised in that** two opposite lateral walls (3, 4) comprise respective underlapping teething elements (5), the other lateral walls (26, 26') comprising teething spacers (27).

15. Paving stone according to any of the preceding claims, **characterised in that** two opposite lateral walls (3, 4) comprise respective overlapping teething elements (6), the other lateral walls (26, 26') comprising teething spacers (27).

16. Paving stone according to any of the preceding claims, **characterised in that** the cams (5, 6) are configured as two-part cams (28, 36), which consist of partial cams (29, 30, 37, 38), the partial cams (29, 30, 37, 38) being separated by a channel (31, 39).

17. Paving stone according to any of the preceding claims, **characterised in that** the channel (31) opens into a channel (34), which is arranged on a lower side (35) of the paving stone (1).

18. Paving stone according to any of the preceding claims, **characterised in that** the lower side (35) comprises longitudinal and/or transverse grooves (42), which receive flooring material.

19. Paving stone according to any of the preceding claims, **characterised in that** the grooves (42) preferably have a height (h) of between 5 and 10 mm.

## Revendications

1. Pavé à utiliser dans un assemblage de pavés, notamment des pavés en béton ou similaires, avec une surface supérieure de roulement ou de passage (2) et des parois latérales verticales (3, 4), au moins une paroi latérale (3, 4) étant munie d'au moins un élément de denture ayant prise par en dessous, formé comme une came (5, 6),
**caractérisée en ce que**
l'au moins une came (5) servant d'élément de denture ayant prise par en dessous est assemblée dans l'assemblage de pavés soit avec une autre came (6) d'un pavé adjacent, ayant prise par au-dessus de manière complémentaire à la came ayant prise par en dessous (5), soit avec un évidement (6) formé de manière correspondante sur ou dans une pavé adjacente, de telle sorte que la surface de denture (11) présente latéralement sur la came forme un joint (14) avec la surface de denture (12) de la came ou de l'évidement du pavé adjacent, joint qui oblique vers le bas en ligne droite, et seuls des éléments de denture (5, 6) ayant prise par le dessus (6) ou par le dessous (5) sont chaque fois prévus respectivement sur deux parois latérales (3, 4) du pavé (1).

2. Pavé selon la revendication 1,
**caractérisée en ce que**
deux côtés de pavé (4) adjacents se limitant l'un l'autre sur l'angle sont munis d'éléments de denture (6) ayant prise par le dessus.

3. Pavé selon l'une quelconque des revendications précédentes,
**caractérisée en ce que**
deux côtés de pavé (3) adjacents se limitant l'un l'autre sur l'angle sont munis d'éléments de denture (5) ayant prise par le dessous.

4. Pavé selon l'une quelconque des revendications précédentes,
**caractérisée en ce que**
les éléments de denture ayant prise par le dessus (6) et par le dessous (5) sont des cames latérales.

5. Pavé selon l'une quelconque des revendications précédentes,
**caractérisée en ce que**
deux éléments de denture (6) ou plus sont prévus sur un côté (4).

6. Pavé selon l'une quelconque des revendications précédentes,
**caractérisée en ce que**
les éléments de denture (5, 6) forment des poches (13) dans l'assemblage de pavés pour le matériau de joint, dans la partie inférieure desquelles débouchent les joints (14) formés entre les surfaces de denture (11, 12) adjacentes de deux éléments de denture (5, 6).

7. Pavé selon l'une quelconque des revendications précédentes,
**caractérisée en ce qu'**
au moins une partie des éléments de denture (5) ayant prise par le dessous dépasse latéralement sur un élément de denture (6) ayant prise par le dessus, mais dont la hauteur finale est inférieure à l'élément de denture ayant prise par le dessus (6).

8. Pavé selon l'une quelconque des revendications précédentes,
**caractérisée en ce que**
le côté supérieur (9, 10) des éléments de denture ayant prise par le dessus (6) est incliné latéralement.

9. Pavé selon l'une quelconque des revendications précédentes,
**caractérisée en ce que**
les éléments de denture ayant prise par le dessus (6) sont munis de pans (10, 11) et d'un pignon (8) disposé au milieu.

10. Pavé selon l'une quelconque des revendications précédentes,
**caractérisée en ce que**
les éléments de denture ayant prise par le dessous (5) présentent des surfaces de denture (12) latérales pour former un pavé pouvant être retiré de l'assemblage de pavés fermé, surfaces dont la largeur B est inférieure à la largeur intérieure A des éléments de denture ayant prise par le dessus (6).

11. Pavé selon l'une quelconque des revendications précédentes,
**caractérisée en ce que**
les éléments de denture ayant prise par le dessus (6) sont formés comme des retraits (6, 22) ayant prise par le dessus qui forment des évidements (6) dans les parois latérales (4).

12. Pavé selon la revendication 11,
**caractérisée en ce que**
les retraits (6, 22) ayant prise par le dessus présentent des contre-dépouilles en forme de queue d'aronde, les éléments de denture ayant prise par le dessous (5) présentant des modelages correspondants.

13. Pavé selon l'une quelconque des revendications précédentes,
**caractérisée en ce que**
seules deux parois latérales opposées (3, 4) présentent chacune des éléments de denture ayant prise par le dessous et/ou par le dessus (5, 6), et **en ce que** de préférence les autres parois latérales (26, 26') présentent des tasseaux (27) s'imbriquant sur toute ou seulement sur une partie des surfaces latérales (26, 26').

14. Pavé selon l'une quelconque des revendications précédentes,
**caractérisée en ce que**
deux parois latérales opposées (3, 4) présentent chacune des éléments de denture ayant prise par le dessous (5), les autres parois latérales (26, 26') présentant des entretoises (27) s'imbriquant.

15. Pavé selon l'une quelconque des revendications précédentes,
**caractérisée en ce que**
deux parois latérales opposées (3, 4) présentent chacune des éléments de denture ayant prise par le dessus (6), les autres parois latérales (26, 26') présentant des tasseaux (27) s'imbriquant.

16. Pavé selon l'une quelconque des revendications précédentes,
**caractérisée en ce que**
les cames (5, 6) sont réalisées comme des cames (28, 36) en deux parties composées de cames partielles (29, 30, 37, 38), les cames partielles (29, 30, 37, 38) étant séparées par un canal (31, 39).

17. Pavé selon l'une quelconque des revendications précédentes,
**caractérisée en ce que**
le canal (31) débouche dans un canal (34) disposé sur l'un des côtés inférieurs (35) du pavé (1).

18. Pavé selon l'une quelconque des revendications précédentes,
**caractérisée en ce que**
le côté inférieur (35) présente des rainures (42) longitudinales et/ou transversales recueillant le matériau de fond.

19. Pavé selon l'une quelconque des revendications précédentes,
**caractérisée en ce que**
les rainures (42) présentent de préférence une hauteur (h) comprise entre 5 et 10 mm.
